(19) Europäisches Patentamt
European Patent Office
Office européen des brevets

(11) **EP 4 645 151 A1**

(12) **EUROPEAN PATENT APPLICATION**
published in accordance with Art. 153(4) EPC

(43) Date of publication:
05.11.2025 Bulletin 2025/45

(21) Application number: 23923694.6

(22) Date of filing: 27.09.2023

(51) International Patent Classification (IPC):
*G06F 30/23* (2020.01)   *G06F 30/28* (2020.01)
*G06F 111/10* (2020.01)   *G06F 113/08* (2020.01)

(52) Cooperative Patent Classification (CPC):
**G06F 30/23; G06F 30/28;** G06F 2111/10;
G06F 2113/08; G06F 2119/14; Y02T 90/00

(86) International application number:
**PCT/CN2023/122012**

(87) International publication number:
**WO 2024/174529 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 20.02.2023 CN 202310182225

(71) Applicants:
• **Comac Beijing Aircraft Technology Research
Institute
Beijing 102200 (CN)**

• **Commercial Aircraft Corporation of China, Ltd
Shanghai 200120 (CN)**

(72) Inventors:
• **WANG, Jielong
Beijing 102200 (CN)**
• **LAI, Guojun
Beijing 102200 (CN)**
• **WU, Yuang
Beijing 102200 (CN)**
• **LIN, Rongting
Beijing 102200 (CN)**

(74) Representative: **Nederlandsch Octrooibureau
P.O. Box 29720
2502 LS The Hague (NL)**

(54) **WIND TUNNEL TEST DATA STATIC AERO-ELASTICITY CORRECTION METHOD AND APPARATUS, DEVICE, AND STORAGE MEDIUM**

(57)    A method and an apparatus for correcting wind tunnel test data for static aeroelasticity, a device, and a storage medium, related to the technical field of wind tunnel tests in aviation, capable to reduce computer storage consumed in computation and improve data-conversion efficiency. The method comprises: performing, based on a 3D unstructured fluid mesh, parallel numerical fluid-dynamics simulation on an wind-tunnel-test aircraft model through a RANS equation by using multiple processes to obtain data of an aerodynamic load at a surface of the aircraft model; interpolating the data of the aerodynamic load onto loading nodes of a geometric-nonlinear structural finite-element model according to a load-transfer law and mapping between aerodynamic grid points at a surface of a 2D unstructured mesh and beam elements in the geometric-nonlinear structural finite-element model; and obtaining a modified aerodynamic force on the aircraft model according to deformation of the aircraft model and an aerodynamic difference.

Generate a 3D unstructured fluid mesh and a geometric-nonlinear structural finite-element model according to a digital version of an aircraft model for a wind tunnel test — S101

Perform, based on the 3D unstructured fluid mesh, parallel numerical fluid-dynamics simulation on the aircraft model through a RANS equation by using a plurality of processes to obtain data of an aerodynamic load at a surface of the aircraft model — S102

Interpolate the data of the aerodynamic load onto loading nodes of the geometric-nonlinear structural finite-element model according to a law of load transfer and a mapping relationship which is between aerodynamic grid points at a surface of a 2D unstructured mesh and beam elements in the geometric-nonlinear structural finite-element model — S103

Perform structural finite-element numerical analysis on the geometric-nonlinear structural finite-element model, which carries the data of the aerodynamic load, to obtain an aerodynamic difference, and obtain a modified aerodynamic force on the aircraft model according to deformation of the aircraft model and the aerodynamic difference — S104

**Figure 1**

## Description

## TECHNICAL FIELD

This application relates to the technical field of wind tunnel tests in aviation, in particular to a method and an apparatus for correcting wind tunnel test data for static aeroelasticity, a device, and a storage medium.

## BACKGROUND

Modern civil airliners adopt backswept wings in order to fly under a high-subsonic or supersonic condition. The backswept wing features in deformation which combines bending and torsion under aerodynamic forces. Such deformation leas to a change in the aerodynamic forces applied on the wing, and the change in turn changes a degree of the deformation, until the wing structure reaches a kind of static equilibrium. Such coupling between the structural and the aerodynamic forces is known as an effect of static aeroelasticity. When performing a wind tunnel test on a civil airliner, a model under the test is also subject to static aeroelasticity deformation under the aerodynamic forces. An aerodynamic difference of the model due to such deformation is regarded as a test deviation which shall be corrected.

In conventional techniques, numerical means such as the radial basis function method and the constant volume tetrahedron method are utilized to implement interaction between aerodynamics data and structural data. When it comes to an overall aircraft structure comprising a fuselage, wings, a pod, a pylon, horizontal tails, and a vertical tail, interpolation computation on aerodynamic load data, structural deformation data, and the like would occupy a large space in computer memory, and hence efficiency of data conversion is low. When it comes to a wind tunnel model having unconventional configurations, the radial basis function method has such low interpolation accuracy that it is not applicable.

## SUMMARY

A method and an apparatus for correcting wind tunnel test data for static aeroelasticity, a computer device, and a storage medium is provided according to embodiments of the present disclosure. Less computer memory is occupied during computation, and conversion of data has high efficiency.

In one aspect, a method for correcting wind tunnel test data for static aeroelasticity is provided according to an embodiment of the present disclosure. The method comprises: generating a three-dimensional unstructured fluid mesh and a geometric-nonlinear structural finite-element model according to a digital version of an aircraft model for a wind tunnel test; performing, based on the three-dimensional unstructured fluid mesh, parallel numerical fluid-dynamics simulation on the aircraft model through a Reynolds-averaged Navier-Stokes (RANS) equation by using multiple processes to obtain data of an aerodynamic load at a surface of the aircraft model; interpolating the data of the aerodynamic load onto loading nodes of the geometric-nonlinear structural finite-element model according to a law of load transfer and a mapping relationship which is between aerodynamic grid points at a surface of a two-dimensional unstructured mesh and beam elements in the geometric-nonlinear structural finite-element model; performing structural finite-element numerical analysis on the geometric-nonlinear structural finite-element model, which carries the data of the aerodynamic load, to obtain an aerodynamic difference; and obtaining a modified aerodynamic force on the aircraft model according to deformation of the aircraft model and the aerodynamic difference.

In another aspect, an apparatus for correcting wind tunnel test data for static aeroelasticity is provided according to an embodiment of the present disclosure. The apparatus comprises: a generating module, configured to generate a three-dimensional unstructured fluid mesh and a geometric-nonlinear structural finite-element model according to a digital version of an aircraft model for a wind tunnel test; a simulating module, configured to perform, based on the three-dimensional unstructured fluid mesh, parallel numerical fluid-dynamics simulation on the aircraft model through a Reynolds-averaged Navier-Stokes (RANS) equation by using multiple processes to obtain data of an aerodynamic load at a surface of the aircraft model; an interpolating module, configured to interpolate the data of the aerodynamic load onto loading nodes of the geometric-nonlinear structural finite-element model according to a law of load transfer and a mapping relationship which is between aerodynamic grid points at a surface of a two-dimensional unstructured mesh and beam elements in the geometric-nonlinear structural finite-element model; and a correcting module, configured to perform structural finite-element numerical analysis on the geometric-nonlinear structural finite-element model, which carries the data of the aerodynamic load, to obtain an aerodynamic difference, and obtain a modified aerodynamic force on the aircraft model according to deformation of the aircraft model and the aerodynamic difference.

In another aspect, a computer program product is provided according to an embodiment of the present disclosure. The computer program product comprises a computer program, and the computer program when executed by a processor implements the foregoing method for correcting wind tunnel test data for static aeroelasticity.

Herein the method and the apparatus for correcting wind tunnel test data for static aeroelasticity, the compute device, and the storage medium are provided. First, the three-dimensional unstructured fluid mesh and the geometric-nonlinear structural finite-element model are generated according to the digital version of the aircraft model for the wind tunnel test. Then, the parallel numerical fluid-dynamics simulation is performed on the aircraft model by using multiple processes, based on the three-dimensional unstructured fluid mesh and through the Reynolds-averaged Navier-Stokes (RANS) equation, so as to obtain the data of the aerodynamic load at the surface of the aircraft model. The data of the aerodynamic load are interpolated onto the loading nodes of the geometric-nonlinear structural finite-element model according to the law of load transfer and the mapping relationship, which is between the aerodynamic grid points at the surface of the two-dimensional unstructured mesh and the beam elements in the geometric-nonlinear structural finite-element model. Afterwards, the structural finite-element numerical analysis is performed on the finite-element model carrying the data of the aerodynamic load, so as to obtain the aerodynamic difference. The modified aerodynamic force on the aircraft model is obtained according to the deformation of the aircraft model and the aerodynamic difference. Herein transmission of the aerodynamic load from surface nodes of the digital aerodynamic model to the structural finite-element nodes is strictly governed by the law of load transfer, and deformation of a grid point at the surface of the aerodynamic model is directly calculated through interpolation based on the finite element to which the grid point belongs. That is, data conversion is performed in a scale of the structural finite element. Accordingly, such correction on the wind tunnel test data with respect to static aeroelasticity only occupies little computer memory, and the data conversion has high efficiency.

## BRIEF DESCRIPTION OF THE DRAWINGS

Figure 1 is a flowchart of a method for correcting wind tunnel test data for static aeroelasticity according to an embodiment of the present disclosure.

Figure 2 is a flowchart of a process of interpolating data of an aerodynamic load on to corresponding loading nodes according to an embodiment of the present disclosure.

Figure 3 is a flowchart of a process of correcting an aerodynamic force on an aircraft model for a wind tunnel test according to an embodiment of the present disclosure.

Figure 4 is a schematic structural diagram of an apparatus for correcting wind tunnel test data for static aeroelasticity according to an embodiment of the present disclosure.

Figure 5 is a schematic diagram of a computer device according to an embodiment of the present disclosure.

## DETAILED DESCRIPTION OF THE EMBODIMENTS

Hereinafter the present disclosure is described in detail through the drawings and specific embodiments, in order to facilitate understanding the foregoing technical solutions. Embodiments of the present disclosure and specific features therein are detailed illustration of the technical solutions, not limitations on the present disclosure. The embodiments and the technical features therein can be combined with each other as long as there is no conflict.

Generally, computational fluid dynamics and structural finite-element analysis are combined in analysis and computation, in order to address an issue of correcting wind tunnel test data for static aeroelasticity.

In computational fluid dynamics, conventional methods include a surface element means based on a geopotential flow, a numerical simulation means based on the Euler equation, and a numerical simulation means based on the Reynolds-averaged Navier-Stokes (RANS) equation. The surface element means has the lightest computation but relies strongly on engineering experience of a user. The numerical simulation method based on Euler equation is capable to reduce an amount of numerical computation through boundary layer precision, but it still consumes more than the surface element means and has just tolerable accuracy. The numerical simulation method based on the RANS equation requires solving an equation of a turbulence model, and it has a largest amount of computation and the best precision.

In structural finite-element analysis, a linear small-deformation beam element model or a three-dimensional (3D) solid element model are utilized when establishing a finite-element model for an aircraft model under wind tunnel test in conventional methods. The linear beam elements are only capable to approximate stiffness characteristics of the model in simulation, and their precision is acceptable for small linear elastic deformation but not feasible for nonlinear large deformation. The 3D solid elements can simulate the stiffness characteristics of the model well, but they meet difficulties when establishing a 3D mesh on complex structures, where an amount of finite-element computation increases exponentially. Equipment for measuring a force and a pressure needs to be installed in advance within the aircraft model for the wind tunnel test, and hence an internal structure of the model is very complex. Thus, the 3D solid elements cannot meet a requirement of modeling structures in engineering applications.

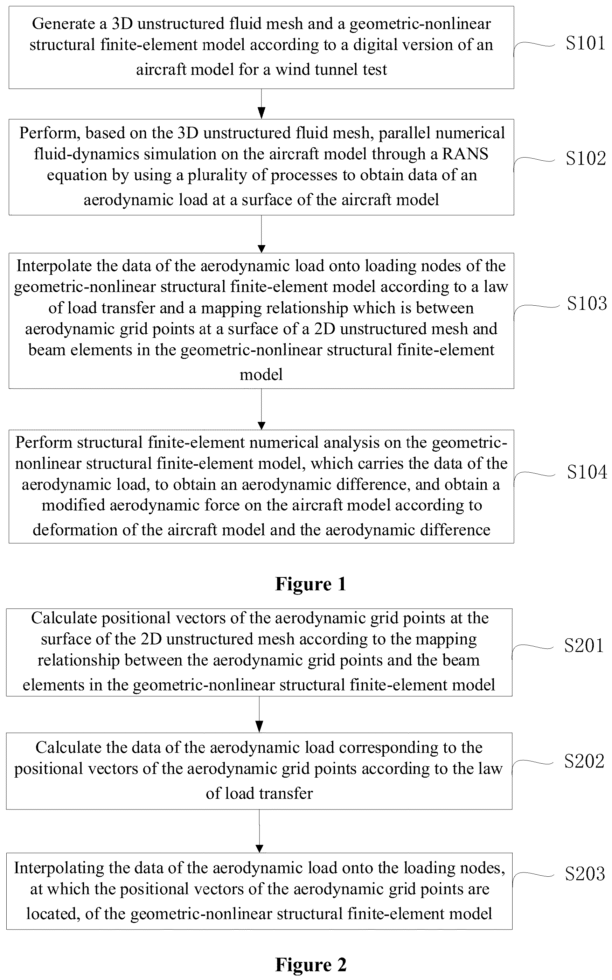

Reference is made to Figure 1, which is a method for correcting wind tunnel test data for static aeroelasticity according to an embodiment of the present disclosure. The method is applicable to a web server. The method may comprise steps S101 to S104.

In step S101, a three-dimensional unstructured fluid mesh and a geometric-nonlinear structural finite-element model are generated according to a digital version of an aircraft model for a wind tunnel test.

The digital version of the aircraft model for the wind tunnel test is a digital model configured for fabricating the test model. The digital model reflects internal structural characteristics of the test model thoroughly. The three-dimensional unstructured fluid mesh and the geometric-nonlinear structural finite-element model for the aircraft model may be established according to the digital version of the aircraft model.

The 3D unstructured fluid mesh of the aircraft model for the wind tunnel test may configured to perform numerical simulation in computational fluid dynamics. The geometric-nonlinear structural finite-element model of the aircraft model for the wind tunnel test may be configured to perform numerical analysis on a virtual static load. The 3D unstructured fluid mesh of the aircraft model may be generated through commercial software for mesh generation. In an embodiment, the digital version of the aircraft model is imported into the software (such as Pointwisem™), then a surface mesh is generated, and arrangement of the surface mesh is adjusted. On such basis, the 3D unstructured fluid mesh of the aircraft model for the wind tunnel test is generated and outputted in a format consistent with the software. The three-dimensional unstructured fluid mesh of the aircraft model may be used for the numerical simulation in computational fluid dynamics.

In an embodiment, during computation of aerodynamics, a turbulence model is selected to be the Shear-Stress transport (SST) k-ω model. In subsequent aerodynamics-structure coupling iterative calculations, a function of continuation of calculation is automatically enabled in a program for static aeroelasticity calculation, and a quantity of steps for computational fluid dynamics (CFD) is reduced to one-third of an initial quantity of steps, so as to shorten time consumption of the aerodynamics-structure coupling iterative calculations.

Herein there may be two manners for establishing the geometric-nonlinear structural finite-element model. In a first manner, the commercial software HyperMesh™ or ABAQUS™ is utilized to segment a structure of the aircraft model for the wind tunnel test into grids, such that a hybrid beam model, in which a global 3D nonlinear beam and local 2D planar elements are coupled, is directly generated. In such manner, a local cross-sectional element mesh and material characteristics are utilized to predict a structural finite-element model of cross-sectional stiffness for a whole aircraft directly. In a second manner, the commercial software NASTRAN™ is utilized to establish a model for an engineering beam and single-point mass, and a script program of the commercial software MATLAM™ is utilized to convert the geometric-nonlinear structural finite-element model is converted into a nonlinear or linear engineering beam model.

In step S102, parallel numerical fluid-dynamics simulation on the aircraft model is performed, by using multiple processes, based on the three-dimensional unstructured fluid mesh through a Reynolds-averaged Navier-Stokes (RANS) equation to obtain data of an aerodynamic load at a surface of the aircraft model.

In an embodiment, a CFD solver for the 3D unstructured fluid mesh is utilized for solving the RANS equation, so as to calculate a flow field. The program for static aeroelasticity calculation may schedule the CFD solver on a high-performance computer cluster. Thereby, automatic large-scale parallel calculation is implemented, and efficiency of CFD calculation is improved.

In an embodiment, the step S102 comprises steps S1021 and S1022.

In step S1021, a two-dimensional (2D) unstructured mesh of a surface of the aircraft model is extracted based on the 3D unstructured fluid mesh.

In an embodiment, the 2D unstructured mesh of the surface of the aircraft model may be outputted based on the 3D unstructured fluid mesh through the commercial software for mesh generation. The 2D unstructured mesh may be configured for extraction and transfer of data on an aerodynamic load. The 2D unstructured mesh may be further configured for extraction and transfer of data on deformation of the finite-element model.

Through the numerical simulation in fluid dynamics, the data of the aerodynamic load at the surface of the aircraft model is obtained based on the 2D unstructured mesh. A file outputted by software for the numerical simulation in fluid dynamics may comprises the data of the aerodynamic load and information on the 3D unstructured fluid mesh. The information on the 3D unstructured fluid mesh may comprise (x, y, z) coordinates and (i, j, k) coordinates of each grid node in such mesh. That is, the output file obtained through the numerical simulation in fluid dynamics is a means for obtaining the data of the aerodynamic load at the surface of the aircraft model for the wind tunnel test.

In step S1022, the data of the aerodynamic load at the surface of the aircraft model is extracted based on the 2D unstructured grid through the parallel numerical fluid-dynamics simulation, which is performed through the RANS equation based on the aircraft model by using the multiple processes.

In an embodiment, the software for computational fluid dynamics may be configured to define a boundary condition for the flow field, set the turbulence model, and thus perform high-precision numerical simulation in computational fluid dynamics through the RANS equation based on the aircraft model by using the multiple process. Thereby, a result of a 3D flow field can be obtained. Accordingly, the data of the aerodynamic at the surface of the aircraft model can be extracted.

Herein the aerodynamic load may be a distributed load obtained through fluid-dynamics calculation, and a main form of the distributed load is pressure coefficients distributed at each grid node on an outer surface of the aircraft model. It is appreciated that the aerodynamic load data may be another aerodynamic data, e.g., aerodynamic values.

In embodiment, before the step S102, stiffness of the geometric-nonlinear structural finite-element model may be corrected and calibrated according to comparison of data of a static loading test data and data of a virtual static load.

Besides establishing the geometric-nonlinear structural finite-element model of the aircraft model, the static loading test may be performed on the aircraft model to obtain the data of the static loading test. The virtual static load is obtained through structural finite-element analysis based on the geometric-nonlinear structural finite-element model of the aircraft model. The virtual static load is compared with the data of the static loading test data to obtain a difference between the two, and finite-element stiffness of the geometric-nonlinear structural finite-element model is corrected and calibrated according to the difference. Thereby, a finite-element model of high-precision can be obtained. The static loading test may be configured for observing and studying strength, stiffness, distribution of stress, and distribution of deformation, of aircraft structures or components under a static load. The static loading test is an important means for verifying a result of analysis on strength of and static forces on an aircraft structure.

Thereby, the geometric-nonlinear structural model is utilized for modeling finite elements in the aircraft model for the wind tunnel test, and its stiffness is calibrated to improve its accuracy greatly. The geometric-nonlinear structural model is capable to predict actual deformation in which bending, torsion, and stretch are coupled. Fidelity of the geometric-nonlinear structural model is close to that of a complete 3D solid structural finite-element model, while its computation efficiency is much higher than that of the 3D solid structural finite-element model. Thereby, a balance between precision and a cost of the computation is optimized for the geometric-nonlinear structural model.

In step S103, the data of the aerodynamic load is interpolated onto loading nodes of the geometric-nonlinear structural finite-element model according to a law of load transfer and a mapping relationship which is between aerodynamic grid points at a surface of a two-dimensional unstructured mesh and beam elements in the geometric-nonlinear structural finite-element model.

Herein data exchange, e.g., between the aerodynamic load and structural deformation, is achieved through finite-element interpolation. Before computation of aerostatic aeroelasticity, the program for aerostatic aeroelasticity calculation identifies automatically structural finite-element beam elements, to which the aerodynamic grid points at a surface of the whole aircraft belong. Each beam element may comprise multiple aerodynamic grid points, and the program establishes a one-to-multiple mapping relationship between the beam elements and the aerodynamic grid points. Generally, multiple surface aerodynamic grid points belong to a single structural finite-element beam element, and the relevant aerodynamic loads are transferred to the node(s) belonging the corresponding beam element according to the law of load transfer.

In step S104, structural finite-element numerical analysis is performed on the geometric-nonlinear structural finite-element model, which carries the data of the aerodynamic load, to obtain an aerodynamic difference, and a modified aerodynamic force on the aircraft model is obtained according to deformation of the aircraft model and the aerodynamic difference.

Herein the finite-element numerical analysis is performed on the geometric-nonlinear structure finite-element model carrying the data of the aerodynamic load, so as to obtain the deformation of the aircraft model for the wind tunnel test. Then, deformation at the surface aerodynamic grid points of the 2D unstructured model of the aircraft model is obtained through finite-element interpolation, so as to obtain deformation of the 3D unstructured fluid mesh. Afterwards, parallel fluid-dynamics numerical simulation is performed to obtain an aerodynamic force on a surface of the aircraft model and the aerodynamic difference induced by the deformation of the aircraft model. Thereby, corrected aerodynamic forces on the aircraft model can be obtained.

In an embodiment, final deformation of the aircraft model is extracted. Results of a first round and a last round in the computational fluid-dynamics numerical simulation are obtained, so as to calculate the difference of the aerodynamic force on the test model between before and after the aeroelasticity deformation. Thereby, data of the wind tunnel test is corrected.

An iterative algorithm of aerodynamics-structure coupling is applied, and the iteration does not terminate until a criterion for the structural deformation difference is met. The entire process of iterative calculation is automated. The data of the aerodynamic load and the data of deformation in the finite-element model are automatically transmitted, and automatic deformation of the 3D unstructured fluid mesh and the finite-element structural mesh is driven, thereby improving efficiency of the whole iterative calculation. A condition of convergence may be modified to control a quantity of steps in the iterative calculation, such that a cost of the computation of the numerical analysis is reduced and precision of the numerical computation is improved. Modeling precision and numerical analysis are well balanced, and the data can be corrected with high precision.

Linear and nonlinear digital version of the aircraft model may be processed by using the LU decomposition method and the simplified Newton method, respectively, for predicting linear and nonlinear deformation. After the structural deformation is predicted, deformation at the surface grid points of the aerodynamic model is directly calculated through performing interpolation on the finite element(s) to which the grid points belong. Afterwards, positional vectors of the aerodynamics grid points are updated. After the deformation of the aerodynamic mesh at the surface of the aircraft model is updated, a new spatial aerodynamic mesh is generated through a linear elastic deformation means.

In an embodiment, a main process for aerodynamics-structure coupling is started first, and control parameters of calculation are read from an input file. A sub-process is created to schedule the program for CFD calculation according to the control parameters, such that the CFD parallel calculation is performed. The main process monitors operation of the sub-process and detects whether the CFD calculation is completed. After the CFD calculation is completed, the aerodynamic load at the surface grid nodes of the whole aircraft is automatically extracted and transmitted to the corresponding structural finite-element node. Then, the program for static aeroelasticity calculation creates a sub-process to schedule the program for finite-element calculation to calculate the structural deformation. The main process continues to monitor operation of such sub-process and detects whether the calculation of the deformation is completed. After the structural finite-element calculation is completed, displacements (i.e., the structural deformation) at the structural finite-element nodes of the structure are transferred, through the finite-element interpolation, to the corresponding aerodynamic grid points at the surface of the aircraft model. Thereby, a new spatial aerodynamic mesh is generated, and a next round of the aerodynamics-structure coupling iterative calculation is entered. The main process determines whether the structural deformation is less than a threshold to serve as a criterion for convergence of static aeroelasticity calculation as well as a criterion for terminating the entire aerodynamics-structural coupling iterative calculation.

The method for correcting wind tunnel test data is provided according to embodiments of the present disclosure. First, the three-dimensional unstructured fluid mesh and the geometric-nonlinear structural finite-element model are generated according to the digital version of the aircraft model for the wind tunnel test. Then, the parallel numerical fluid-dynamics simulation is performed on the aircraft model by using multiple processes, based on the three-dimensional unstructured fluid mesh and through the RANS equation, so as to obtain the data of the aerodynamic load at the surface of the aircraft model. The data of the aerodynamic load are interpolated onto the loading nodes of the geometric-nonlinear structural finite-element model according to the law of load transfer and the mapping relationship, which is between the aerodynamic grid points at the surface of the two-dimensional unstructured mesh and the beam elements in the geometric-nonlinear structural finite-element model. Afterwards, the structural finite-element numerical analysis is performed on the finite-element model carrying the data of the aerodynamic load, so as to obtain the aerodynamic difference. The modified aerodynamic force on the aircraft model is obtained according to the deformation of the aircraft model and the aerodynamic difference. Herein transmission of the aerodynamic load from surface nodes of the digital aerodynamic model to the structural finite-element nodes is strictly governed by the law of load transfer, and deformation of a grid point at the surface of the aerodynamic model is directly calculated through interpolation based on the finite element to which the grid point belongs. That is, data conversion is performed in a scale of the structural finite element. Accordingly, such correction on the wind tunnel test data with respect to static aeroelasticity only occupies little computer memory, and the data conversion has high efficiency.

Reference is made to Figure 2. The step S103 comprises following steps S201 to S203.

In step S201, positional vectors of the aerodynamic grid points at the surface of the 2D unstructured mesh are calculated according to the mapping relationship between the aerodynamic grid points and the beam elements in the geometric-nonlinear structural finite-element model.

In an embodiment, the mapping relationship between the aerodynamics grid points and the beam elements is expressed as follows.

$$\bar{u}_a = \bar{u}_s + \bar{d}$$

$\bar{u}_a$ is the positional vector of the aerodynamic grid point. $\bar{u}_s$ is the positional vector of the beam element corresponding to the aerodynamic grid point. $\bar{d}$ is a distance vector of the aerodynamic grid point with respect to the beam element.

In step S202, the data of the aerodynamic load corresponding to the positional vectors of the aerodynamic grid points is calculated according to the law of load transfer theorem.

The law of load transfer may be expressed as

$$\delta W = \delta \bar{u}_a^T \bar{p} = \left\lfloor \delta \bar{u}_{sn}^T, \delta \bar{\psi}_n^T \right\rfloor \bar{F}_s$$

The data of the aerodynamic load corresponding to the positional vectors of the aerodynamic grid points is calculated according to the following equation.

$$\bar{F}_s = \begin{vmatrix} H^T \bar{p} \\ H^T (\bar{d} \times \bar{p}) \end{vmatrix}$$

$\delta \bar{u}_a^T$ is variation of the positional vector at the aerodynamic grid point at the surface. $\delta \bar{u}_{sn}^T$ is variation of the positional vector at a beam element node corresponding to the aerodynamic grid point. $\delta \bar{\psi}_n^T$ is variation of a rotation vector at the beam element node corresponding to the aerodynamic grid point. $\delta W$ is virtual work of an aerodynamic pressure at the aerodynamic grid point. $\bar{F}_s$ is a concentrated load of a structural finite-element node. $\bar{p}$ is the aerodynamic pressure at the aerodynamic grid point. $H^T$ is a transposed matrix of a shape function for beam elements of structural finite elements.

In step S203, the data of the aerodynamic load is interpolated onto the loading nodes, at which the positional vectors of the aerodynamic grid points are located, of the geometric-nonlinear structural finite-element model.

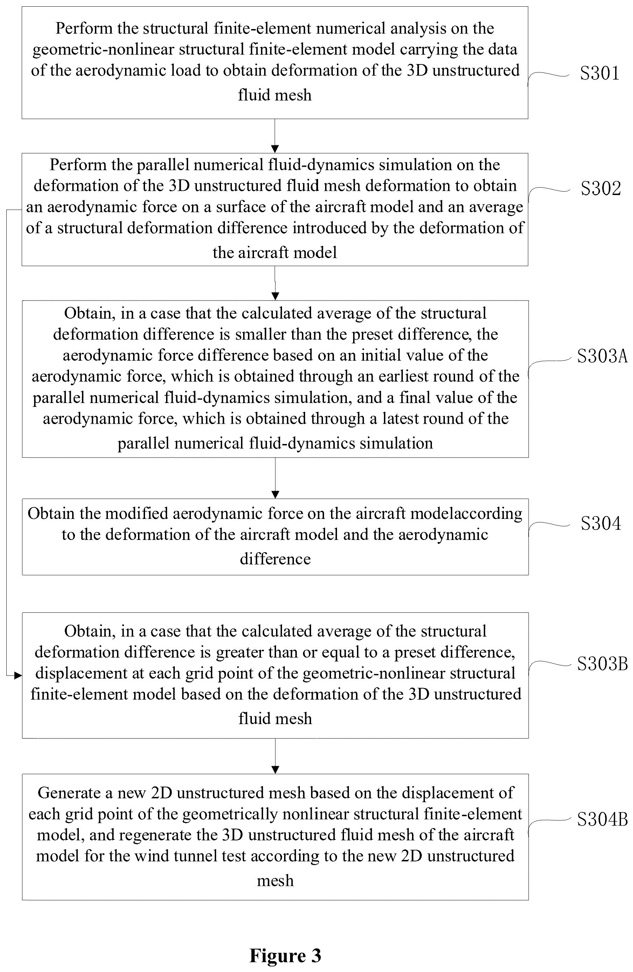

Reference is made to Figure 3. The step S104 comprises following steps S301 to S304B.

In step S301, the structural finite-element numerical analysis is performed on the geometric-nonlinear structural finite-element model carrying the data of the aerodynamic load to obtain deformation of the 3D unstructured fluid mesh.

In step S302, the parallel numerical fluid-dynamics simulation is performed on the deformation of the 3D unstructured fluid mesh deformation to obtain an aerodynamic force on a surface of the aircraft model and an average of a structural deformation difference introduced by the deformation of the aircraft model.

In an embodiment, the step S302 comprises a following step.

The average of the structural deformation difference is calculated through a following equation.

$$\|\Delta \bar{u}_n\|_2 = \frac{1}{m} \sqrt{\sum_{i=1}^m \Delta u_i^2}$$

$\|\Delta \bar{u}_n\|_2$ is the average of the structural deformation difference. $\Delta \bar{u}_n$ is the structural deformation difference between a current round of iteration and an immediate previous round of iteration. m is a quantity of degrees of freedom for structural finite elements. $\Delta u_i$ is a component of the structural deformation difference.

The process proceeds to step S303B in a case that the calculated average of the structural deformation difference is greater than or equal to a preset difference, which may be defined by a user, e.g. 10^-6 meters. The process proceeds to step S303A in a case that the calculated average of the structural deformation difference is smaller than the preset difference.

In step S303A, the aerodynamic force difference is obtained based on an initial value of the aerodynamic force, which is obtained through an earliest round of the parallel numerical fluid-dynamics simulation, and a final value of the aerodynamic force, which is obtained through a latest round of the parallel numerical fluid-dynamics simulation.

In an embodiment, the average of the structural deformation difference being less than the preset difference may be expressed as a following equation.

$$\|\Delta \bar{u}_n\|_2 = \frac{1}{m} \sqrt{\sum_{i=1}^m \Delta u_i^2} < \epsilon$$

$\epsilon$ is the preset difference, that is, an error threshold. $\epsilon$ may range from 10^-6 meters to 10^-2 meters. In practice, the preset difference may be configured according to an actual situation. The preset difference may thus be modified to control a quantity of steps in the coupling iterative calculation, such that a computational cost of the numerical analysis can be reduced, and accuracy of the coupling numerical calculation can be improved. Modeling accuracy and computation amount of the numerical analysis can be well balanced, and a result of correcting the hydrostatic aeroelasticity in data of the wind tunnel test can have high precision.

In step S304, the modified aerodynamic force on the aircraft model is obtained according to the deformation of the aircraft model and the aerodynamic difference.

Thereby, the average of the structural deformation difference being less than the preset difference indicates that the average is within an acceptable error range. Hence, the process can proceed to obtain the modified aerodynamic force on the aircraft model according to the deformation of the aircraft model and the aerodynamic difference.

In step S303B, displacement at each grid point of the geometric-nonlinear structural finite-element model is obtained based on the deformation of the 3D unstructured fluid mesh.

In step S304B, a new 2D unstructured mesh is generated based on the displacement of each grid point of the geometrically nonlinear structural finite-element model, and the 3D unstructured fluid mesh of the aircraft model for the wind tunnel test is regenerated according to the new 2D unstructured mesh.

In an embodiment, regenerating the 3D unstructured fluid mesh according to the new 2D unstructured grid comprises following steps.

After the deformation of the aircraft model has been calculated and configuration positions of the model have been updated, the positional vectors of the aerodynamic grid points on the surface, which has been updated, is calculated through a following equation.

$$\bar{u}_a = H\bar{u}_n + \bar{d}$$

$\bar{u}_a$ is the positional vector of the aerodynamic grid point on the deformed surface. $\bar{u}_n$ is the positional vector of the deformed beam element node. H is a matrix of the shape function of beam elements of structural finite elements.

Then, the positional vectors of all spatial aerodynamic grid points in the 3D unstructured fluid mesh of the aircraft model are updated through a linear elastic deformation means.

After the step S304B, the process returns to the step S102 based on the regenerated 3D unstructured fluid mesh, and then continue the flow.

The sequential number of each step in the foregoing embodiments does not indicate a sequence of execution. The sequence of execution should be determined based on the functions of the steps and an internal logic among the steps. The sequence does not constitute any limitation on embodiments of the present disclosure.

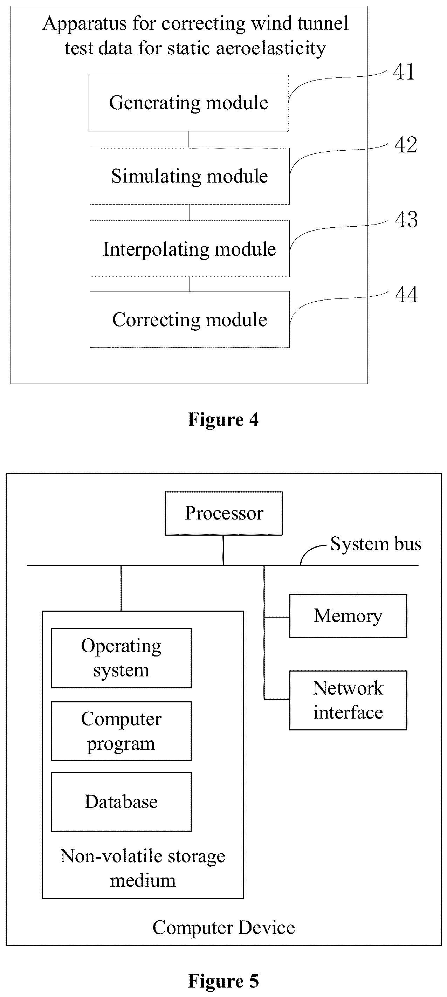

An apparatus for correcting wind tunnel test data for static aeroelasticity is further provided according to an embodiment of the present disclosure. The apparatuses provided herein are in correspondence to the methods in the foregoing embodiment. Hereinafter each functional module of apparatus is illustrated, as shown in Figure 4.

The generating module 41 is configured to generate a 3D unstructured fluid mesh and a geometric-nonlinear structural finite-element model according to a digital version of an aircraft model for a wind tunnel test.

The simulating module 42 is configured to perform, based on the 3D unstructured fluid mesh, parallel numerical fluid-dynamics simulation on the aircraft model through a RANS equation by using multiple processes to obtain data of an aerodynamic load at a surface of the aircraft model.

The interpolating module 43 is configured to interpolate the data of the aerodynamic load onto loading nodes of the geometric-nonlinear structural finite-element model according to a law of load transfer and a mapping relationship which is between aerodynamic grid points at a surface of a 2D unstructured mesh and beam elements in the geometric-nonlinear structural finite-element model.

The correcting module 44 is configured to perform structural finite-element numerical analysis on the geometric-nonlinear structural finite-element model, which carries the data of the aerodynamic load, to obtain an aerodynamic difference, and obtain a modified aerodynamic force on the aircraft model according to deformation of the aircraft model and the aerodynamic difference.

In an embodiment, the simulating module 42 is configured to: extract a 2D unstructured mesh of a surface of the aircraft model based on the 3D unstructured fluid mesh; and extract the data of the aerodynamic load at the surface of the aircraft model based on the 2D unstructured grid through the parallel numerical fluid-dynamics simulation, which is performed through the RANS equation based on the aircraft model by using the multiple processes.

In an embodiment, the interpolating module 43 is configured to: calculate positional vectors of the aerodynamic grid points at the surface of the 2D unstructured mesh according to the mapping relationship between the aerodynamic grid points and the beam elements in the geometric-nonlinear structural finite-element model; calculate the data of the aerodynamic load corresponding to the positional vectors of the aerodynamic grid points according to the law of load transfer theorem; and interpolate the data of the aerodynamic load onto the loading nodes, at which the positional vectors of the aerodynamic grid points are located, of the geometric-nonlinear structural finite-element model.

In an embodiment, the mapping relationship between the aerodynamics grid points and the beam elements is $\bar{u}_a = \bar{u}_s + \bar{d}$, the law of load transfer may be expressed as $\delta W = \delta \bar{u}_a^T \bar{p} = \lfloor \delta \bar{u}_{sn}^T, \delta \bar{\psi}_n^T \rfloor \bar{F}_s$, and the data of the aerodynamic load corresponding to the positional vectors of the aerodynamic grid points is calculated according to

$$\bar{F}_s = \left| \begin{array}{c} H^T \bar{p} \\ H^T (\bar{d} \times \bar{p}) \end{array} \right|;$$

where $\bar{u}_a$ is a positional vector of each of the aerodynamic grid points, $\bar{u}_s$ is a positional vector of a beam element corresponding to said aerodynamic grid point, and $\bar{d}$ is a distance vector of said aerodynamic grid point with respect to the beam element; where $\delta \bar{u}_a^T$ is variation of the positional vector at said aerodynamic grid point, $\delta \bar{u}_{sn}^T$ is variation of a positional vector at a beam element node corresponding to said aerodynamic grid point, $\delta \bar{\psi}_n^T$ is variation of a rotation vector at the beam element node, $\delta W$ is virtual work of an aerodynamic pressure at said aerodynamic grid point, $\bar{F}_s$ is a concentrated load of a structural finite-element node, $\bar{p}$ is the aerodynamic pressure at said aerodynamic grid point, $H^T$ is a transposed matrix of a shape function for beam elements of structural finite elements.

In an optional embodiment, the correcting module 44 is configured to: perform the structural finite-element numerical analysis on the geometric-nonlinear structural finite-element model carrying the data of the aerodynamic load to obtain deformation of the 3D unstructured fluid mesh; perform the parallel numerical fluid-dynamics simulation on the deformation of the 3D unstructured fluid mesh deformation to obtain an aerodynamic force on a surface of the aircraft model and an average of a structural deformation difference introduced by the deformation of the aircraft model; and in a case that the calculated average of the structural deformation difference is smaller than a preset difference, obtain the aerodynamic force difference based on an initial value of the aerodynamic force, which is obtained through an earliest round of the parallel numerical fluid-dynamics simulation, and a final value of the aerodynamic force, which is obtained through a latest round of the parallel numerical fluid-dynamics simulation, and obtain the modified aerodynamic force on the aircraft model according to the deformation of the aircraft model and the aerodynamic difference.

In an embodiment, when performing the parallel numerical fluid-dynamics simulation on the deformation of the 3D unstructured fluid mesh deformation to obtain the average of the structural deformation difference introduced by the deformation of the aircraft model, the correcting module 44 is configured to: calculate the average of the structural deformation difference through

$$\|\Delta \bar{u}_n\|_2 = \frac{1}{m} \sqrt{\sum_{i=1}^{m} \Delta u_i^2},$$

where $\|\Delta \bar{u}_n\|_2$ is the average of the structural deformation difference, $\Delta \bar{u}_n$ is the structural deformation difference between a current round of iteration and an immediate previous round of iteration, and m is a quantity of degrees of freedom for structural finite elements, $\Delta u_i$ is a component of the structural deformation difference.

In an embodiment, the correcting module 44 is further configured to, in a case that the calculated average of the structural deformation difference is greater than or equal to a preset difference: obtain displacement at each grid point of the geometric-nonlinear structural finite-element model based on the deformation of the 3D unstructured fluid mesh; generate a new 2D unstructured mesh based on the displacement of each grid point of the geometrically nonlinear structural finite-element model; regenerate the 3D unstructured fluid mesh of the aircraft model for the wind tunnel test according to the new 2D unstructured mesh; and reactivate the simulating module 42 to perform, based on the 3D unstructured fluid mesh, the parallel numerical fluid-dynamics simulation on the aircraft model through the RANS equation by using multiple processes to obtain the data of the aerodynamic load at the surface of the aircraft model.

In an embodiment, after calculating deformation of the aircraft model and updating configuration positions of the model, positional vectors of aerodynamic grid points on a deformed surface of the new 2D unstructured mesh is calculated through:

$$\bar{u}_a = H \bar{u}_n + \bar{d},$$

where $\bar{u}_a$ is a positional vector of each aerodynamic grid point on the deformed surface, $\bar{u}_n$ is a positional vector of a deformed beam element node corresponding to said aerodynamic grid point, and H is a matrix of a shape function of beam elements of structural finite elements; and where the positional vectors of all spatial aerodynamic grid points in the 3D unstructured fluid mesh of the aircraft model are updated through a linear elastic deformation means.

Details of the apparatus(es) for correcting wind tunnel test data for static aeroelasticity may refer to the foregoing details of the method(s) for correcting wind tunnel test data for static aeroelasticity, and hence would not be repeated herein. Individual modules in the apparatus(es) may be implemented, as a whole or in part, by means of software, hardware, or a combination thereof. Each module may be embedded in or independent from a processor of a computer device in a form of hardware and may alternatively be stored in a memory of the computer device in a form of software to enable the processor to invoke the module(s) to perform their respective operations.

A computer device is further provided according to an embodiment of the present disclosure. The computer device may be a server. An internal structure of the computer device may be as shown in Figure 5. The computer device comprises a processor, a storage, a network interface, and a database, which are connected via a system bus. The processor is configured to provide a capability of computation and control. The memory comprises a non-volatile storage medium and an internal memory. The non-volatile storage medium is configured to store an operating system, a computer program, and a database. The internal memory is configured to provide an environment for operation of the operating system and the computer programs in non-volatile storage media. The network interface is configured to communicate with an external terminal via network connection. The computer program is configured to be executed by the processor to implement the method for correcting wind tunnel test data for static aeroelasticity.

In an embodiment, a computer device is provided. The computer comprises a memory, a processor, and a computer program which is stored on the memory and is capable to be executed by the processor. The computer program when executed by the processor implements following steps.

A three-dimensional unstructured fluid mesh and a geometric-nonlinear structural finite-element model are generated according to a digital version of an aircraft model for a wind tunnel test.

Parallel numerical fluid-dynamics simulation on the aircraft model is performed, by using multiple processes, based on the three-dimensional unstructured fluid mesh through a Reynolds-averaged Navier-Stokes (RANS) equation to obtain data of an aerodynamic load at a surface of the aircraft model.

The data of the aerodynamic load is interpolated onto loading nodes of the geometric-nonlinear structural finite-element model according to a law of load transfer and a mapping relationship which is between aerodynamic grid points at a surface of a two-dimensional unstructured mesh and beam elements in the geometric-nonlinear structural finite-element model.

Structural finite-element numerical analysis is performed on the geometric-nonlinear structural finite-element model, which carries the data of the aerodynamic load, to obtain an aerodynamic difference, and a modified aerodynamic force on the aircraft model is obtained according to deformation of the aircraft model and the aerodynamic difference.

A computer-readable storage medium is further provided according to an embodiment of the present disclosure. A computer program is stored on the computer-readable storage medium, and the computer program when executed by a processor implements following steps.

A three-dimensional unstructured fluid mesh and a geometric-nonlinear structural finite-element model are generated according to a digital version of an aircraft model for a wind tunnel test.

Parallel numerical fluid-dynamics simulation on the aircraft model is performed, by using multiple processes, based on the three-dimensional unstructured fluid mesh through a Reynolds-averaged Navier-Stokes (RANS) equation to obtain data of an aerodynamic load at a surface of the aircraft model.

The data of the aerodynamic load is interpolated onto loading nodes of the geometric-nonlinear structural finite-element model according to a law of load transfer and a mapping relationship which is between aerodynamic grid points at a surface of a two-dimensional unstructured mesh and beam elements in the geometric-nonlinear structural finite-element model.

Structural finite-element numerical analysis is performed on the geometric-nonlinear structural finite-element model, which carries the data of the aerodynamic load, to obtain an aerodynamic difference, and a modified aerodynamic force on the aircraft model is obtained according to deformation of the aircraft model and the aerodynamic difference.

A computer program product is further provided according to an embodiment of the present disclosure. The computer program product comprises a computer program, and the computer program when executed by a processor implements following steps.

A three-dimensional unstructured fluid mesh and a geometric-nonlinear structural finite-element model are generated according to a digital version of an aircraft model for a wind tunnel test.

Parallel numerical fluid-dynamics simulation on the aircraft model is performed, by using multiple processes, based on the three-dimensional unstructured fluid mesh through a Reynolds-averaged Navier-Stokes (RANS) equation to obtain data of an aerodynamic load at a surface of the aircraft model.

The data of the aerodynamic load is interpolated onto loading nodes of the geometric-nonlinear structural finite-element model according to a law of load transfer and a mapping relationship which is between aerodynamic grid points at a surface of a two-dimensional unstructured mesh and beam elements in the geometric-nonlinear structural finite-element model.

Structural finite-element numerical analysis is performed on the geometric-nonlinear structural finite-element model, which carries the data of the aerodynamic load, to obtain an aerodynamic difference, and a modified aerodynamic force on the aircraft model is obtained according to deformation of the aircraft model and the aerodynamic difference.

Those skilled in the art may understand that all or a part of a process in the method(s) illustrated in the foregoing embodiments may be implemented through instructing relevant hardware through a computer program, and the computer program may be stored in a non-volatile computer-readable storage medium. The computer program when executed may implement a flow as illustrated in each method embodiment. Herein any reference to a memory, a storage, a database, or another medium used in any embodiment of the present disclosure may include a non-volatile memory and/or a volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a random-access memory (RAM) or an external cache memory. Illustratively rather than restrictively, the RAM may be in a variety of forms, such as a static RAM (SRAM), a dynamic RAM (DRAM), a synchronous DRAM (SDRAM), a dual data rate SDRAM (DDRSDRAM), an enhanced SDRAM (ESDRAM), a synchlink DRAM (SLDRAM), a memory bus (Rambus) direct RAM (RDRAM), a direct memory bus dynamic RAM (DRDRAM), and a memory bus dynamic RAM (RDRAM), or the like.

Those skilled in the art may clearly appreciate that for the sake of conciseness and brevity of description, the division of the aforementioned functional units and/or modules is merely exemplary. In practice, the aforementioned functional units and/or modules may be assigned to different functional units or different modules on requirement. That is, an internal structure of the apparatus may be divided into different functional units or modules to complete all or a part of the aforementioned functions.

The above embodiments are only intended for illustrating rather than limiting technical solutions of the present disclosure. Although the present disclosure has been described in detail with reference to the foregoing embodiments, those skilled in the art may appreciate that the technical solutions recorded in the foregoing embodiments may be modified or some of the technical features in the solutions may be replaced, and these modifications or replacements shall fall within the scope of protection of the present disclosure as long as they do not make an essence of the corresponding technical solutions depart from a spirit and a scope of the original technical solutions in the embodiments of the present disclosure.

**Claims**

1. A method for correcting wind tunnel test data for static aeroelasticity, comprising:

   generating a three-dimensional (3D) unstructured fluid mesh and a geometric-nonlinear structural finite-element model according to a digital version of an aircraft model for a wind tunnel test;
   performing, based on the 3D unstructured fluid mesh, parallel numerical fluid-dynamics simulation on the aircraft model through a Reynolds-averaged Navier-Stokes (RANS) equation by using a plurality of processes to obtain data of an aerodynamic load at a surface of the aircraft model;

interpolating the data of the aerodynamic load onto loading nodes of the geometric-nonlinear structural finite-element model according to a law of load transfer and a mapping relationship which is between aerodynamic grid points at a surface of a two-dimensional (2D) unstructured mesh and beam elements in the geometric-nonlinear structural finite-element model; and

performing structural finite-element numerical analysis on the geometric-nonlinear structural finite-element model, which carries the data of the aerodynamic load, to obtain an aerodynamic difference, and obtaining a modified aerodynamic force on the aircraft model according to deformation of the aircraft model and the aerodynamic difference.

2. The method according to claim 1, wherein performing, based on the 3D unstructured fluid mesh, the parallel numerical fluid-dynamics simulation on the aircraft model through the RANS equation by using the plurality of processes to obtain the data of the aerodynamic load at the surface of the aircraft model comprises:

extracting a 2D unstructured mesh of a surface of the aircraft model based on the 3D unstructured fluid mesh; and

extracting the data of the aerodynamic load at the surface of the aircraft model based on the 2D unstructured grid through the parallel numerical fluid-dynamics simulation, which is performed through the RANS equation based on the aircraft model by using the plurality of processes.

3. The method according to claim 1, wherein interpolating the data of the aerodynamic load onto the loading nodes of the geometric-nonlinear structural finite-element model according to the law of load transfer and the mapping relationship which is between the aerodynamic grid points at the surface of the 2D unstructured mesh and the beam elements in the geometric-nonlinear structural finite-element model comprises:

calculating positional vectors of the aerodynamic grid points at the surface of the 2D unstructured mesh according to the mapping relationship between the aerodynamic grid points and the beam elements in the geometric-nonlinear structural finite-element model;

calculating the data of the aerodynamic load corresponding to the positional vectors of the aerodynamic grid points according to the law of load transfer; and

interpolating the data of the aerodynamic load onto the loading nodes, at which the positional vectors of the aerodynamic grid points are located, of the geometric-nonlinear structural finite-element model.

4. The method according to claim 2, wherein the mapping relationship between the aerodynamics grid points and the beam elements is $\overline{u}_a = \overline{u}_s + \overline{d}$, the law of load transfer may be expressed as

$$\delta W = \delta \overline{u}_a^T \overline{p} = \left[ \delta \overline{u}_{sn}^T, \delta \overline{\psi}_n^T \right] \overline{F}_s$$, and the data of the aerodynamic load corresponding to the positional vectors of the aerodynamic grid points is calculated according to:

$$\overline{F}_s = \left| \begin{array}{c} H^T \overline{p} \\ H^T \left( \overline{d} \times \overline{p} \right) \end{array} \right|;$$

wherein $\overline{u}_a$ is a positional vector of each of the aerodynamic grid points, $\overline{u}_s$ is a positional vector of a beam element corresponding to said aerodynamic grid point, and $\overline{d}$ is a distance vector of said aerodynamic grid point with respect to the beam element; and

wherein $\delta \overline{u}_a^T$ is variation of the positional vector at said aerodynamic grid point, $\delta \overline{u}_{sn}^T$ is variation of a positional vector at a beam element node corresponding to said aerodynamic grid point, $\delta \overline{\psi}_n^T$ is variation of a rotation vector at the beam element node, $\delta W$ is virtual work of an aerodynamic pressure at said aerodynamic grid point, $\overline{F}_s$ is a concentrated load of a structural finite-element node, $\overline{p}$ is the aerodynamic pressure at said aerodynamic grid point, $H^T$ is a transposed matrix of a shape function for beam elements of structural finite elements.

5. The method according to claim 1, wherein performing the structural finite-element numerical analysis on the geometric-nonlinear structural finite-element model, which carries the data of the aerodynamic load, to obtain the aerodynamic difference and obtaining the modified aerodynamic force on the aircraft model according to the deformation of the aircraft model and the aerodynamic difference comprises:

performing the structural finite-element numerical analysis on the geometric-nonlinear structural finite-element model carrying the data of the aerodynamic load to obtain deformation of the 3D unstructured fluid mesh;

performing the parallel numerical fluid-dynamics simulation on the deformation of the 3D unstructured fluid mesh deformation to obtain an aerodynamic force on a surface of the aircraft model and an average of a structural deformation difference introduced by the deformation of the aircraft model; and

in a case that the calculated average of the structural deformation difference is smaller than a preset difference,

> obtaining the aerodynamic force difference based on an initial value of the aerodynamic force, which is obtained through an earliest round of the parallel numerical fluid-dynamics simulation, and a final value of the aerodynamic force, which is obtained through a latest round of the parallel numerical fluid-dynamics simulation; and
> obtaining the modified aerodynamic force on the aircraft model according to the deformation of the aircraft model and the aerodynamic difference.

6. The method according to claim 5, wherein performing the parallel numerical fluid-dynamics simulation on the deformation of the 3D unstructured fluid mesh deformation to obtain the average of the structural deformation difference introduced by the deformation of the aircraft model comprises:

> calculate the average of the structural deformation difference through

$$\|\Delta \bar{u}_n\|_2 = \frac{1}{m}\sqrt{\sum_{i=1}^{m}\Delta u_i^2},$$

> wherein $\|\Delta\bar{u}_n\|_2$ is the average of the structural deformation difference, $\Delta\bar{u}_n$ is the structural deformation difference between a current round of iteration and an immediate previous round of iteration, and m is a quantity of degrees of freedom for structural finite elements, $\Delta u_i$ is a component of the structural deformation difference.

7. The method according to claim 5, further comprising, in a case that the calculated average of the structural deformation difference is greater than or equal to a preset difference:

> obtaining displacement at each grid point of the geometric-nonlinear structural finite-element model based on the deformation of the 3D unstructured fluid mesh;
> generating a new 2D unstructured mesh based on the displacement of each grid point of the geometrically nonlinear structural finite-element model; and
regenerating the 3D unstructured fluid mesh of the aircraft model for the wind tunnel test according to the new 2D unstructured mesh; and
returning to the step of performing, based on the 3D unstructured fluid mesh, the parallel numerical fluid-dynamics simulation on the aircraft model through the RANS equation by using the plurality of processes to obtain the data of the aerodynamic load at the surface of the aircraft model.

8. The method according to claim 7, wherein regenerating the 3D unstructured fluid mesh of the aircraft model for the wind tunnel test according to the new 2D unstructured mesh comprises, after calculating deformation of the aircraft model and updating configuration positions of the model:

> calculating positional vectors of aerodynamic grid points on a deformed surface of the new 2D unstructured mesh is calculated through $\bar{u}_a = H\bar{u}_n + \bar{d}$, wherein $\bar{u}_a$ is a positional vector of each aerodynamic grid point on the deformed surface, $\bar{u}_n$ is a positional vector of a deformed beam element node corresponding to said aerodynamic grid point, and H is a matrix of a shape function of beam elements of structural finite elements; and
> updating the positional vectors of all spatial aerodynamic grid points in the 3D unstructured fluid mesh of the aircraft model through a linear elastic deformation means.

9. An apparatus for correcting wind tunnel test data for static aeroelasticity, comprising:

> a generating module, configured to generate a three-dimensional unstructured fluid mesh and a geometric-nonlinear structural finite-element model according to a digital version of an aircraft model for a wind tunnel test;
> a simulating module, configured to perform, based on the three-dimensional unstructured fluid mesh, parallel numerical fluid-dynamics simulation on the aircraft model through a Reynolds-averaged Navier-Stokes (RANS) equation by using a plurality of processes to obtain data of an aerodynamic load at a surface of the aircraft model;
> an interpolating module, configured to interpolate the data of the aerodynamic load onto loading nodes of the geometric-nonlinear structural finite-element model according to a law of load transfer and a mapping relationship which is between aerodynamic grid points at a surface of a two-dimensional unstructured mesh and beam elements in the geometric-nonlinear structural finite-element model; and
a correcting module, configured to:

> perform structural finite-element numerical analysis on the geometric-nonlinear structural finite-element model, which carries the data of the aerodynamic load, to obtain an aerodynamic difference, and
> obtain a modified aerodynamic force on the aircraft model according to deformation of the aircraft model and the aerodynamic difference.

**10.** A computer device, comprises:

> a memory,
> a processor, and
> a computer program stored in the memory, wherein the computer program is capable to be executed by the processor, and the computer program when executed by the processor implements the method according to any one of claims 1 to 8.

**11.** A computer-readable storage medium, storing a computer program, wherein the computer program when executed by the processor implements the method according to any one of claims 1 to 8.

| | |
|---|---|
| Generate a 3D unstructured fluid mesh and a geometric-nonlinear structural finite-element model according to a digital version of an aircraft model for a wind tunnel test | S101 |

↓

| | |
|---|---|
| Perform, based on the 3D unstructured fluid mesh, parallel numerical fluid-dynamics simulation on the aircraft model through a RANS equation by using a plurality of processes to obtain data of an aerodynamic load at a surface of the aircraft model | S102 |

↓

| | |
|---|---|
| Interpolate the data of the aerodynamic load onto loading nodes of the geometric-nonlinear structural finite-element model according to a law of load transfer and a mapping relationship which is between aerodynamic grid points at a surface of a 2D unstructured mesh and beam elements in the geometric-nonlinear structural finite-element model | S103 |

↓

| | |
|---|---|
| Perform structural finite-element numerical analysis on the geometric-nonlinear structural finite-element model, which carries the data of the aerodynamic load, to obtain an aerodynamic difference, and obtain a modified aerodynamic force on the aircraft model according to deformation of the aircraft model and the aerodynamic difference | S104 |

**Figure 1**

| | |
|---|---|
| Calculate positional vectors of the aerodynamic grid points at the surface of the 2D unstructured mesh according to the mapping relationship between the aerodynamic grid points and the beam elements in the geometric-nonlinear structural finite-element model | S201 |

↓

| | |
|---|---|
| Calculate the data of the aerodynamic load corresponding to the positional vectors of the aerodynamic grid points according to the law of load transfer | S202 |

↓

| | |
|---|---|
| Interpolating the data of the aerodynamic load onto the loading nodes, at which the positional vectors of the aerodynamic grid points are located, of the geometric-nonlinear structural finite-element model | S203 |

**Figure 2**

Perform the structural finite-element numerical analysis on the geometric-nonlinear structural finite-element model carrying the data of the aerodynamic load to obtain deformation of the 3D unstructured fluid mesh — S301

Perform the parallel numerical fluid-dynamics simulation on the deformation of the 3D unstructured fluid mesh deformation to obtain an aerodynamic force on a surface of the aircraft model and an average of a structural deformation difference introduced by the deformation of the aircraft model — S302

Obtain, in a case that the calculated average of the structural deformation difference is smaller than the preset difference, the aerodynamic force difference based on an initial value of the aerodynamic force, which is obtained through an earliest round of the parallel numerical fluid-dynamics simulation, and a final value of the aerodynamic force, which is obtained through a latest round of the parallel numerical fluid-dynamics simulation — S303A

Obtain the modified aerodynamic force on the aircraft modelaccording to the deformation of the aircraft model and the aerodynamic difference — S304

Obtain, in a case that the calculated average of the structural deformation difference is greater than or equal to a preset difference, displacement at each grid point of the geometric-nonlinear structural finite-element model based on the deformation of the 3D unstructured fluid mesh — S303B

Generate a new 2D unstructured mesh based on the displacement of each grid point of the geometrically nonlinear structural finite-element model, and regenerate the 3D unstructured fluid mesh of the aircraft model for the wind tunnel test according to the new 2D unstructured mesh — S304B

**Figure 3**

Apparatus for correcting wind tunnel
test data for static aeroelasticity

Generating module —— 41

Simulating module —— 42

Interpolating module —— 43

Correcting module —— 44

**Figure 4**

Processor

System bus

Memory

Network
interface

Operating
system

Computer
program

Database

Non-volatile storage
medium

Computer Device

**Figure 5**

## INTERNATIONAL SEARCH REPORT

| International application No. |
| --- |
| **PCT/CN2023/122012** |

| A. | CLASSIFICATION OF SUBJECT MATTER |
| --- | --- |

G06F 30/23(2020.01)i；G06F 30/28(2020.01)i；G06F 111/10 (2020.01)i；G06F 113/08(2020.01)i

According to International Patent Classification (IPC) or to both national classification and IPC

| B. | FIELDS SEARCHED |
| --- | --- |

Minimum documentation searched (classification system followed by classification symbols)

IPC：G06F

Documentation searched other than minimum documentation to the extent that such documents are included in the fields searched

Electronic data base consulted during the international search (name of data base and, where practicable, search terms used)

VEN, CNTXT, WOTXT, EPTXT, USTXT, CNKI, IEEE: 航空, 飞机, 风洞, 试验, 变形, 气动, 修正, 网格, 有限元, 载荷, 插值, Aviation, aircraft, wind tunnel, test, deformation, aerodynamics, correction, mesh, finite element, load, interpolation

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116401907 A (COMAC BEIJING AERONAUTICAL SCIENCE & TECHNOLOGY RESEARCH INSTITUTE (BASTRI) et al.) 07 July 2023 (2023-07-07) claims 1-11 | 1-11 |
| A | CN 112414668 A (COMAC BEIJING AERONAUTICAL SCIENCE & TECHNOLOGY RESEARCH INSTITUTE (BASTRI) et al.) 26 February 2021 (2021-02-26) description, paragraphs [0082]-[0095] | 1-11 |
| A | CN 112214843 A (COMAC BEIJING AERONAUTICAL SCIENCE & TECHNOLOGY RESEARCH INSTITUTE (BASTRI) et al.) 12 January 2021 (2021-01-12) entire document | 1-11 |
| A | DE 102014105366 A1 (AIRBUS OPERATIONS GMBH) 15 October 2015 (2015-10-15) entire document | 1-11 |
| A | WO 2017084106 A1 (TIAN CHUAN et al.) 26 May 2017 (2017-05-26) entire document | 1-11 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 December 2023** | **22 December 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/122012**

| Patent document cited in search report | | | Publication date (day/month/year) | Patent family member(s) | Publication date (day/month/year) |
|---|---|---|---|---|---|
| CN | 116401907 | A | 07 July 2023 | None | |
| CN | 112414668 | A | 26 February 2021 | None | |
| CN | 112214843 | A | 12 January 2021 | None | |
| DE | 102014105366 | A1 | 15 October 2015 | None | |
| WO | 2017084106 | A1 | 26 May 2017 | None | |

Form PCT/ISA/210 (patent family annex) (July 2022)